# DEMANDE DE BREVET EUROPEEN

(11) **EP 1 883 239 A1**
(43) Date de publication de la demande: **30.01.2008**
(21) Numéro de dépôt: 06117739.0
(22) Date de dépôt: 24.07.2006
(51) Int. Cl.: H04N 7/16, H04N 5/00

(54) **Méthode de stockage et d'exploitation d'un évènement audio/video diffusé**

(71) Demandeur: Nagravision S.A., 1033 Cheseaux-sur-Lausanne (CH)
(72) Inventeur: Le Buhan, Corinne, 1619, Les Paccots (CH)
(74) Mandataire: Cornut, Isabelle

(57) **Abrégé**

Le but de la présente invention est de permettre une exploitation flexible d'un contenu diffusé et enregistré, en particulier pour permettre tant aux utilisateurs qu'aux diffuseurs de concilier interdiction temporaire et exploitation postérieure.

Ce but est atteint par une méthode de stockage d'un événement diffusé, par au moins un récepteur, cette méthode comprenant les étapes suivantes :
- stockage d'un événement encrypté par au moins une clé de contenu,
- stockage d'une licence de contrôle comprenant la clé de contenu, un identifiant de l'événement et des premières conditions d'utilisation,
- après la fin de la diffusion de l'événement, génération et stockage d'un message de libération, comprenant l'identifiant de l'événement et des secondes conditions d'uti lisation,
- lors de l'exploitation de l'événement, recherche d'un message de libération, et si un tel message existe, exécution des secondes conditions d'utilisation du message de libération en lieu et place des premières conditions d'utilisation de la licence de contrôle.

## Description

### Introduction

La présente invention concerne le domaine de la transmission de contenu audio/vidéo sujet à accès conditionnel à travers des réseaux numériques, en particulier la gestion géographique et temporelle des droits de consommation de contenu dans ces réseaux.

### Etat de la technique

Il est bien connu de permettre à un diffuseur de gérer la réception d'un événement selon l'emplacement géographique. En effet, les diffuseurs souhaitent interdire l'accès à un contenu tel qu'une retransmission sportive dans les alentours du lieu où se déroule cet événement. Ainsi, par la connaissance de l'emplacement de chaque récepteur, une commande dite de « blackout » est envoyée au récepteur avec par exemple le ou les codes postaux qui ne peuvent visualiser l'événement en direct. Le module de sécurité du récepteur qui détient l'information de localisation (par exemple le code postal de l'abonné au service), recevant ce message, va donc appliquer une nouvelle règle lors de la vérification des droits et même si le récepteur dispose des droits pour cet événement, le message de « blackout » a priorité pour interdire l'accès à l'événement en ne renvoyant pas les mots de contrôle qui ont servi à encrypter l'événement.

Avec le développement des réseaux numériques personnels, des mesures complémentaires sont prévues afin d'éviter la transmission à distance d'un récepteur situé dans une zone couverte par les droits de réception à un récepteur situé dans une zone non couverte. C'est notamment le but de certains signaux de protection des règles d'usage autorisé (USI - Usage State Information) tels que décrits dans le document « Content Protection and Copy Management » publié par le forum DVB (http://www.dvb.org/technology/dvb-cpcm/a094.DVB-CPCM.pdf). En particulier les règles d'usage VLOCAL ou VLAD (respectivement MLOCAL ou MLAD) indiquent des restrictions de visualisation (respectivement de copie) à un réseau domestique local.

Néanmoins, lorsque les utilisateurs disposent de moyens d'enregistrement du contenu audio/vidéo tels que fournis par un enregistreur vidéo personnel, interdire a posteriori la visualisation de l'événement est difficilement acceptable pour les utilisateurs même s'ils étaient localisés proche de l'endroit de l'événement. C'est pourquoi dans les règles d'usage décrite par DVB CPCM, il est prévu une règle « Remote Access Rule post Record» qui permet de relaxer les restrictions d'accès telles que VLOCAL ou VLAD à distance après la fin de l'enregistrement d'un évènement. Il est à noter que la durée de l'événement est rarement connue à l'avance, par exemple pour des événements sportifs ; dès lors, une commande définissant la durée envoyée en début de diffusion est difficilement applicable. Ainsi, lors de la diffusion d'événements à restriction géographique non permanente, il reste un problème non résolu qui est de gérer un tel contenu enregistré pour en autoriser la visualisation, une fois l'événement terminé, par un utilisateur qui est à l'intérieur de la zone de restriction.

De façon bien connue de l'homme du métier, le module de sécurité peut être réalisé essentiellement selon quatre formes distinctes. L'une d'elles est une carte à microprocesseur, une carte à puce, ou plus généralement un module électronique (ayant une forme de clé, de badge,...). Un tel module est généralement amovible et connectable au décodeur. La forme avec contacts électriques est la plus utilisée, mais n'exclut pas une liaison sans contact par exemple de type ISO 14443.

Une deuxième forme connue est celle d'un boîtier de circuit intégré placé, généralement de façon définitive et inamovible dans le boîtier du décodeur. Une variante est constituée d'un circuit monté sur un socle ou connecteur tel qu'un connecteur de module SIM.

Dans une troisième forme, le module de sécurité est intégré dans un boîtier de circuit intégré ayant également une autre fonction, par exemple dans un module de désembrouillage du décodeur ou le microprocesseur du décodeur.

Dans une quatrième forme de réalisation, le module de sécurité n'est pas réalisé sous forme matérielle, mais sa fonction est mise en oeuvre sous forme uniquement logicielle. Etant donné que dans les quatre cas, bien que le niveau de sécurité diffère, la fonction est identique, on parlera de module de sécurité quelle que soit la manière de réaliser sa fonction ou la forme que peut prendre ce module.

En particulier on ne fera pas de distinction entre un module de sécurité responsable de l'accès conditionnel au contenu lors de sa télédiffusion (cas d'une restriction « blackout » conventionnelle) et un module de sécurité responsable de la protection des règles d'usage dans un réseau domestique (cas d'un module CPCM Instance), lesquels peuvent prendre l'une ou l'autre des formes de réalisation susmentionnées.

### Brève description de l'invention

Le but de la présente invention est de permettre une exploitation flexible d'un contenu diffusé et enregistré, en particulier pour permettre tant aux utilisateurs qu'aux diffuseurs de concilier interdiction temporaire et exploitation postérieure.
Ce but est atteint par une méthode de stockage d'un événement diffusé, par au moins un récepteur, cette méthode comprenant les étapes suivantes :
- stockage d'un événement encrypté par au moins une clé de contenu,
- stockage d'une licence de contrôle comprenant la clé de contenu, un identifiant de l'événement et des premières conditions d'utilisation,
- après la fin de la diffusion de l'événement, génération et stockage d'un message de libération, comprenant l'identifiant de l'événement et des secondes conditions d'utilisation,
- lors de l'exploitation de l'événement, recherche d'un message de libération, et si un tel message existe, exécution des secondes conditions d'utilisation du message de libération en lieu et place des premières conditions d'utilisation de la licence de contrôle.

Selon une variante de cette méthode, le but est également atteint par une méthode de stockage d'un événement diffusé, par au moins un récepteur disposant d'un module de sécurité en charge des opérations de sécurité, cette méthode comprenant les étapes suivantes :
- stockage d'un événement encrypté par au moins une clé de contenu,
- stockage d'une licence de contrôle comprenant la clé de contenu, un identifiant de l'événement et des premières conditions d'utilisation,
- après la fin de la diffusion de l'événement, génération d'un message de libération, contenant l'identifiant de l'événement et des secondes conditions d'utilisation, extraction de la licence de contrôle et remplacement des premières conditions par les secondes conditions pour créer une nouvelle licence de contrôle,
- stockage par le récepteur de la nouvelle licence de contrôle puis lors de l'exploitation de l'événement, utilisation de la nouvelle licence de contrôle.

Dans le cas ou l'événement est encrypté par une pluralité de clés de contenu, la licence pour chacune de celles-ci est extraite pour remplacer les premières conditions par les secondes conditions. Il est vérifié que l'identification de l'événement est bien le même entre la licence de contrôle et le message de libération.

La génération du message de libération peut se faire soit localement dans le récepteur selon des conditions prédéfinies (conditionnelles au moment du changement de l'identifiant de l'évènement dans le flux d'ECM sur un service donné), soit par le centre de gestion qui gère la diffusion de l'événement. Ce centre transmet dans le flux de données à destination du récepteur, le message de libération lorsque les conditions pour un tel message sont remplies.

Le stockage peut se faire soit localement dans le récepteur initial de l'évènement diffusé, soit à distance dans un autre récepteur relié au premier récepteur par un réseau numérique.

Par "fin de la diffusion de l'événement" on entend le moment où la partie principale de l'événement a été diffusée, par exemple lors de la diffusion du générique de fin, ou à tout autre moment postérieur à la diffusion de cet événement (1 minute plus tard par exemple).

### Brève description des figures

La présente invention sera mieux comprise grâce aux figures annexées à savoir :
- la figure 1 illustre un récepteur avec unité de stockage
- la figure 2 illustre un premier mode de réalisation
- la figure 3 illustre un second mode de réalisation
- la figure 4 illustre un troisième mode de réalisation

### Description détaillée

Le centre de gestion en charge de la diffusion d'un événement, diffuse par voie hertzienne, câblée, via Internet ou autre un événement tel qu'un film, une retransmission sportive ou tout autre contenu multimédia. Cet événement est encrypté par au moins une clé d'événement Ki. Cette dernière est placée dans un message de contrôle qui va contenir également l'identification de l'événement et les conditions d'utilisation de l'événement. Ces conditions peuvent décrire plusieurs manières de consommer l'événement telles que par exemple la possibilité ou l'interdiction de stocker l'événement, l'interdiction ou la possibilité de la visualiser immédiatement, le nombre de visualisations de l'événement, la durée pendant laquelle l'exploitation de l'événement est autorisée, retransmission à l'extérieur du récepteur etc.

Les messages de contrôle peuvent prendre la forme d'ECM (Entitlement Control Messages) selon la norme MPEG-2 ou d'une licence accompagnant le contenu selon différentes solutions connues dans l'état de l'art.

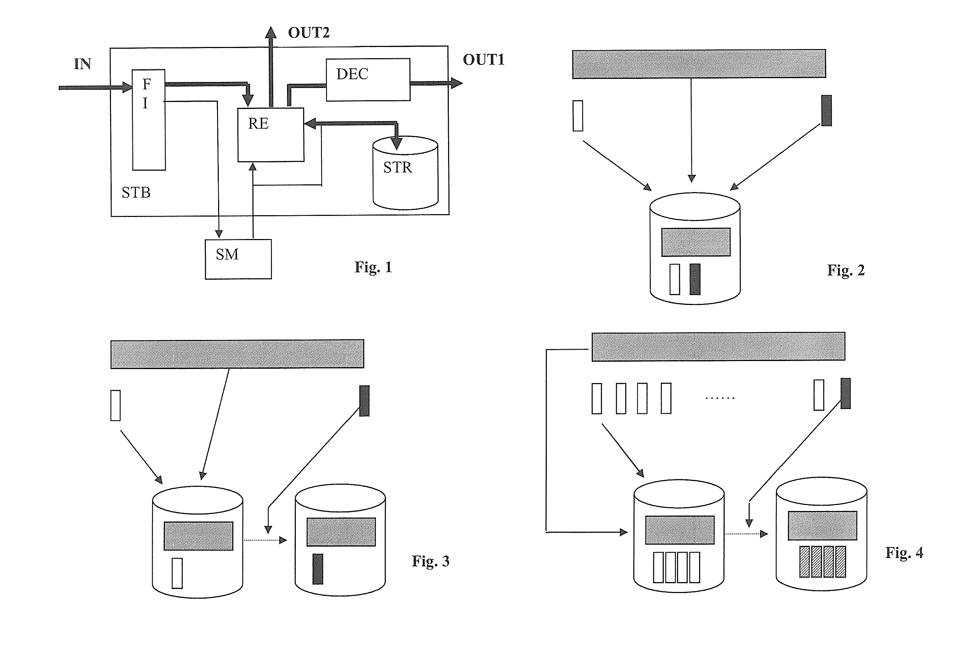

Le récepteur STB de la figure 1 comprend une entrée pour le flux de données qui sont acheminées, après une première mise en forme (démodulation par exemple) vers un filtre FI. Ce filtre FI permet d'isoler un flux unitaire comprenant des sous flux tels que données audio, données vidéo, données de signalisation, messages de contrôle.

Le récepteur STB de la figure 1 comprend également un module de traitement RE permettant de traiter les données audio/vidéo, et notamment de les décrypter et éventuellement les ré-encrypter si nécessaire avant de les transmettre soit à l'unité de visualisation locale (module de décompression DEC), soit à l'unité de stockage local (STR), soit à une sortie vers le réseau numérique externe pour stockage ou visualisation dans un second récepteur.

Pour ce faire, plusieurs modes d'opérations peuvent être envisagés :
- dans un premier mode d'opération, le contenu audio/vidéo encrypté par une clé d'événement Ki globale à tous les récepteurs (une clé définie au centre de gestion) est décrypté dans le module de traitement RE et réencrypté par une clé locale avant d'être utilisé par le récepteur STB. La clé globale Ki est transmise soit simultanément aux données audio/vidéo, soit en avance, sous la forme d'un message de contrôle. Le contenu audio/vidéo peut être encrypté par une clé unique Ki pour tout le contenu, ou une pluralité de clés Ki1, Ki2, ..., chaque clé permettant d'accéder à une partie du contenu. Dans ce dernier cas, le module de sécurité va traiter les messages de contrôle au fur et à mesure des besoins et retourner au module de traitement RE la licence de contrôle nécessaire au moment donné.
- dans un second mode d'opération, le contenu audio/vidéo encrypté n'est pas modifié.

Le ou les messages de contrôle sont eux-mêmes décryptés et ré-encryptés par une clé locale (ceci peut être une clé du réseau local) dans le module de sécurité SM qui retourne la ou les licences de contrôle correspondantes au module de traitement. Ainsi le contenu pourra être accessible même dans le second mode si la clé globale est modifiée.

Un mécanisme de synchronisation entre les données audio/vidéo (utilisation d'un pointer dans le flux pour retrouver la licence en cours) permet de retourner la clé actuelle lors de son utilisation. Le module de sécurité vérifie les conditions d'utilisation du contenu et ne renvoie la ou les licences de contrôle que si l'utilisateur dispose d'un premier droit de traitement. Ce droit ne signifie pas que l'on puisse visualiser le contenu, ce droit d'exploitation pouvant être acquis plus tard : par exemple pour ce cas, dans les règles d'usage décrites par DVB CPCM, il est prévu une règle « Viewable» qui permet d'indiquer explicitement que le contenu n'est pas encore visualisable dans la licence de contrôle.

Le contenu peut être transmis dans un réseau local, stocké dans l'unité de stockage et/ou visualisé sous réserve des règles d'usage spécifiées par la licence de contrôle attachée à ce contenu. Un contenu stocké est géré entièrement localement, sur la base des indications contenues dans la licence de contrôle.

Selon la norme CPCM, il est fait une différence entre l'exportation des données et son traitement local.

Par exemple, si les règles d'usage stipulent que l'événement ne peut pas être visualisé immédiatement, comme par exemple dans une configuration de "Blackout" dans laquelle le récepteur de l'évènement est sujet à la restriction de visualisation, l'événement n'est pas décompressé et aucun signal n'est transmis à la sortie OUT du récepteur.

Dans un autre exemple, si les règles d'usage stipulent que l'événement ne peut pas être transmis au-delà du réseau local, comme par exemple dans une configuration de "Blackout" dans laquelle le récepteur de l'évènement n'est pas sujet à la restriction de visualisation mais d'autres récepteurs à distance y sont sujets, l'événement peut être décompressé localement et transmis à la sortie OUT1 du récepteur local, mais la sortie numérique du récepteur OUT2 vers le réseau est soit désactivée, soit sujette à un contrôle de proximité des connections (par exemple avec contrôle de time-out).

Le module de sécurité SM prépare donc une licence de contrôle locale sur la base d'un message de contrôle global (télédiffusé) reçue du centre de gestion et contenant la clé d'encryption de l'événement (clé Ki globale dans le premier mode d'opération, clé locale dans le second mode d'opération), ainsi que l'identifiant de l'événement et les conditions d'utilisation dans le réseau domestique. Les conditions initiales reçues par le centre de gestion peuvent être modifiées selon la configuration de l'installation ou des droits de base de l'utilisateur. Une telle solution est décrite dans le document WO01/80563. Cette licence de contrôle générée par le module de sécurité SM est transmise à l'unité de traitement RE, soit pour utilisation immédiate (visualisation), soit pour enregistrement sur l'unité de stockage STR, soit pour transmission à travers le réseau numérique, sous réserve des conditions d'utilisation (règles d'usage) spécifiées par la licence de contrôle.

Ainsi, dans l'illustration de la figure 2, l'événement est stocké sous forme encryptée avec la licence de contrôle (rectangle en blanc) comprenant les premières conditions d'utilisation. A la fin de la diffusion de l'événement, le centre de gestion transmet un message de libération contenant les secondes conditions d'utilisation (relaxation des règles d'usage). Ce message (rectangle noir) est stocké également sur l'unité de stockage. Les secondes conditions d'accès peuvent être l'autorisation de visualiser l'événement par exemple en plus de son stockage, ou l'autorisation de transmettre l'évènement pour visualisation à distance en plus de la visualisation locale.

Si l'utilisateur souhaite accéder à cet événement pour le visualiser ou pour le transmettre à distance, le récepteur STB va rechercher la présence d'un message de libération stocké sur l'unité de stockage STR. Ce message peut avoir un en-tête particulier indiquant qu'il s'agit d'un tel message ou simplement il s'agit du message le plus récent relatif à cet événement. Le module de sécurité SM décrypte ce message et vérifie que l'identifiant de l'événement contenu dans ce message est authentique et correspond bien à l'événement souhaité. Dans l'affirmative, ce sont ces conditions d'utilisation qui seront appliquées à ce contenu et non celles de la licence de contrôle initiale.

Selon un mode de réalisation, la clé de l'événement ne se trouve que dans la licence de contrôle initiale (rectangle blanc) et une fois les secondes conditions d'utilisation vérifiées, le module de traitement peut utiliser la clé de l'événement dans la licence de contrôle.

Il se peut que le centre de gestion insère la clé de l'événement dans le message de libération. Ceci permet au récepteur, dès qu'il a trouvé le message de libération, de ne plus avoir besoin de la licence de contrôle.

Toutefois dans le cas ou le contenu est re-chiffré localement avant stockage avec des clés générées par le module de sécurité, le centre de gestion ne connaît pas la clé de chiffrement correspondante. Dans ce cas il est possible que le module de sécurité insère la clé de l'évènement dans un message de libération local, généré localement à partir de la licence de contrôle stockée localement d'une part et du message de libération global (télédiffusé) reçu du centre de gestion d'autre part.

Sur la figure 3, l'arrivée du message de libération provoque la réécriture de la licence de contrôle avec les secondes conditions d'utilisation contenues dans le message de libération. Le message finalement stocké dans l'unité de stockage est une concaténation des informations contenues dans la licence de contrôle (rectangle blanc) et des informations contenues (essentiellement les secondes conditions d'utilisation) dans le message de libération. Ce message peut être produit par le module de sécurité qui effectue cette concaténation et génère le nouveau message ou, comme indiqué plus haut, le message de libération contient toutes les informations nécessaires (clé de contenu entre autre) rendant la présence de la licence de contrôle inutile.

Le cas est un peu plus compliqué lorsque l'événement est encrypté par une pluralité de clés comme illustré sur la figure 4, comme c'est le cas par exemple dans les systèmes de télédiffusion conventionnels. Une licence de contrôle, appelée ECM dans la norme MPEG-2 ISO13818-1, contenant la clé courante est envoyée chaque fois que la clé encryptant l'événement change.

Dans le cas ou le contenu est stocké tel que télédiffusé sans être re-chiffré localement, ces multiples licences de contrôle sont stockées sur l'unité de stockage STR avec l'événement au fur et à mesure de la réception.

Dans le cas ou le contenu est re-chiffré localement, il est possible que le module de sécurité génère une clé de contenu différente et une licence de contrôle locale contenant cette dernière pour chaque licence de contrôle reçue, comme décrit dans la demande W09916244. Ces licences de contrôle sont stockées sur l'unité de stockage STR avec l'événement au fur et à mesure de la réception et du rechiffrement de ce dernier.

Ainsi, dans chacune de ces licences stockées sur l'unité de stockage STR se trouvent les premières conditions d'utilisation.

Selon un premier mode de réalisation, lors de la génération du message de libération, ce dernier provoque la remise à jour de tous les messages préalablement transmis, illustré par des rectangles grisés. Les licences de contrôle contenant la clé courante vont désormais contenir les secondes conditions d'utilisation.

Selon un second mode de réalisation, le message de libération est stocké dans l'unité de stockage STR en plus des licences de contrôle. C'est au récepteur, avant de traiter un événement depuis l'unité de stockage STR, de vérifier si un tel message de libération relatif à cet événement existe sur cette dernière, et dans l'affirmative, tenir compte des secondes conditions d'accès en lieu et place des conditions contenues dans les licences de contrôle intermédiaires.

Selon un autre mode d'implémentation de l'invention, le message de libération n'est pas transmis par le centre de gestion mais généré localement, en particulier par le module de sécurité. Le premier message de licence de contrôle va contenir les premières et secondes conditions d'utilisation explicites. Ces secondes conditions seront utilisées soit pour générer et stocker le message de libération, soit pour la mise à jour du ou des licences de contrôle reçues lors de la diffusion de l'événement.

Selon une première variante, une information de durée est communiquée dans le message de la licence de contrôle pour indiquer à quel moment le module de sécurité pourra générer le message de libération. Dès que le temps prédéfini est arrivé à son terme, le module de sécurité génère le message de libération avec les conséquences décrites dans les différents modes de réalisation expliqués ci-dessus.

Selon une seconde variante, la détection de la fin d'un événement se fait grâce à l'identifiant de l'événement. Chaque licence de contrôle comprend la clé courante de l'événement et l'identifiant de l'événement. Dès que le module de sécurité reçoit un message de licence de contrôle comportant un autre identifiant d'événement, il déclenche la génération du message de libération. Pour éviter que l'utilisateur utilise cet artifice pour générer intempestivement un tel message lors d'un changement de chaîne par exemple, le module de sécurité peut interdire toute génération ou stockage d'un nouveau message de licence de contrôle dès lors qu'il a généré le message de libération. Ceci aura comme conséquence que l'utilisateur pourra bien voir immédiatement le début de l'événement, mais la partie de l'événement enregistrée sur son unité de stockage depuis la génération du message de libération jusqu'à la fin de l'événement lui sera inaccessible car les licences de contrôle ne seront plus stockées.

Selon un mode de génération locale du message de libération, le changement de canal de diffusion ne déclenche pas immédiatement un tel message. Un temps minimum est exigé (par exemple plus grand que la coupure de publicité) sur un autre canal pour que la condition de fin de l'événement soit remplie. S'il retourne sur l'événement pour lequel un message de libération est en attente, ce temps sera remis à zéro. En fin d'événement, le message de libération sera généré après l'expiration du temps minimum, quelque soit le canal sur lequel l'utilisateur sera.

Toujours à titre de sécurité complémentaire, selon l'implémentation des mécanismes de stockage d'information, le module de sécurité peut demander l'effacement du message de libération ou le régénérer avec les premières conditions d'utilisation plus restrictives si ledit module reçoit une licence de contrôle portant le même identifiant d'événement après la génération du message de libération, car cela indique que la diffusion de l'évènement n'est pas terminée.

Il est également possible de combiner le mode horaire et le mode automatique. En effet, le module de sécurité est informé que l'événement durera au moins 105 minutes pour un match de football. A partir de ce moment, le module de sécurité va surveiller un changement de canal (ou chaîne) et déclencher le message de libération dès l'apparition d'un message de licence de contrôle relatif à un autre événement.

Dans le premier mode de réalisation décrit précédemment, le module de traitement RE comprend également un module d'encryption dudit événement grâce à une clé de ré-encryption. Cette clé peut être une clé propre au module de décryption/ré-encryption RE ou être fournie par le module de sécurité SM. Dans ce cas, cette clé peut être une clé personnelle du module de sécurité c'est-à-dire commune pour toutes les ré-encryptions faites par le module décryption/ré-encryption RE, ou cette clé peut être générée aléatoirement par le module de sécurité SM pour cet événement. Le flux de données audio/vidéo ré-encrypté est stocké dans l'unité de stockage STR ou transmis à un autre récepteur à travers le réseau numérique.

## Revendications

1. Méthode de stockage et d'exploitation par au moins un récepteur d'un événement diffusé, cette méthode comprenant les étapes suivantes :
- stockage d'un événement encrypté par au moins une clé de contenu,
- stockage d'une licence de contrôle comprenant la clé de l'événement, un identifiant de l'événement et des premières conditions d'utilisation,
- après la fin de la diffusion de l'événement, génération et stockage d'un message de libération, comprenant l'identifiant de l'événement et des secondes conditions d'utilisation,
- lors de l'exploitation de l'événement, recherche d'un message de libération, et si un tel message existe, exécution des secondes conditions d'utilisation du message de libération en lieu et place des premières conditions d'utilisation de la licence de contrôle.

2. Méthode selon la revendication 1, **caractérisée en ce que** l'événement est préalablement décrypté par ledit récepteur et ré-encrypté par une clé d'encryption locale avant son stockage, la clé stockée avec ladite licence de contrôle étant la clé d'encryption locale.

3. Méthode selon la revendication 1 ou 2, **caractérisée en ce que** la clé de l'événement est contenue dans un message encrypté par une clé de transport, cette méthode comprenant les étapes suivantes:
- décryption du message encrypté par la clé de transport,
- extraction de la clé de l'événement,
- ré-encryption de la clé de l'événement par une clé locale,
- stockage de la clé de l'événement ré-encryptée par la clé locale avec la licence de contrôle.

4. Méthode selon les revendications 1 à 3, l'événement étant diffusé par un centre de diffusion, **caractérisée en ce que** la génération du message de libération est faite par le centre de diffusion dès que les conditions de fin de l'événement sont remplies.

5. Méthode selon les revendications 1 à 3, ledit récepteur étant connecté à un module de sécurité en charge du traitement des licences de contrôle, **caractérisée en ce que** la génération du message de libération est faite par le module de sécurité du récepteur dès que les conditions de fin de l'événement sont détectées.

6. Méthode selon la revendication 5, **caractérisée en ce que** les conditions de fin de l'événement sont remplies lorsqu'un qu'un temps de transmission de l'événement est achevé.

7. Méthode selon la revendication 5, **caractérisée en ce que** les conditions de fin de l'événement sont remplies lorsque l'utilisateur change de canal de diffusion.

8. Méthode selon la revendication 5, **caractérisée en ce que** les conditions de fin de l'événement principal sont remplies lors de la réception d'un événement secondaire pour une durée minimum prédéfinie, chaque retour sur l'événement principal réinitialisant le compteur.

9. Méthode selon la revendication 5, **caractérisée en ce que** les conditions de fin de l'événement principal sont remplies lorsqu'une durée prédéfinie de l'événement est atteinte et que l'utilisateur change de canal.

10. Méthode selon l'une des revendications 1 à 10, **caractérisée en ce que** les premières conditions d'utilisation définissent une interdiction de visualisation de l'événement diffusé et **en ce que** les secondes conditions d'utilisation définissent une autorisation de visualisation de l'événement diffusé.

11. Méthode selon l'une des revendications 1 à 10, **caractérisée en ce que** les premières conditions d'utilisation définissent une interdiction d'exportation de l'événement diffusé sur un réseau et **en ce que** les secondes conditions d'utilisation définissent une autorisation d'exportation de l'événement diffusé sur ledit réseau.

12. Méthode de stockage d'un événement diffusé, par au moins un récepteur disposant d'un module de sécurité en charge des opérations de sécurité, cette méthode comprenant les étapes suivantes :
- stockage d'un événement encrypté par au moins une clé de contenu,
- stockage d'une licence de contrôle comprenant la clé de contenu, un identifiant de l'événement et des premières conditions d'utilisation,
- lors de la fin de l'événement, génération d'un message de libération, contenant l'identifiant de l'événement et des secondes conditions d'utilisation, extraction de la licence de contrôle et remplacement des premières conditions par les secondes conditions pour créer une nouvelle licence de contrôle,
- stockage par le récepteur de la nouvelle licence de contrôle puis lors de l'exploitation de l'événement, utilisation de la nouvelle licence de contrôle.
